# EUROPÄISCHE PATENTSCHRIFT

(11) **EP 3 672 800 B1**
(45) Veröffentlichungstag und Bekanntmachung des Hinweises auf die Patenterteilung: **14.04.2021**
(21) Anmeldenummer: 18759089.8
(22) Anmeldetag: 21.08.2018
(51) Int. Cl.: B32B 17/10

(54) **VERBUNDGLAS, VERBUNDSICHERHEITSGLAS UND VERFAHREN ZUR HERSTELLUNG EINES SOLCHEN**
LAMINATED GLASS, LAMINATED SAFETY GLASS, AND METHOD FOR THE PRODUCTION THEREOF
VITRAGE FEUILLETÉ, VITRAGE FEUILLETÉ DE SÉCURITÉ ET PROCÉDÉ POUR SA FABRICATION

(30) Priorität: 21.08.2017 DE 102017119055
(43) Veröffentlichungstag der Anmeldung: 01.07.2020
(73) Patentinhaber: Seen GmbH, 9104 Waldstatt (CH)
(72) Erfinder: SEIDLER, Rouven, 3367 Thörigen (CH)
(74) Vertreter: Eisenführ Speiser
(86) Internationale Anmeldenummer: PCT/EP2018/072567
(87) Internationale Veröffentlichungsnummer: WO 2019/038288

(56) Entgegenhaltungen:
- EP-A1- 2 248 676
- DE-A1- 2 313 278
- DE-A1-102006 057 049
- FR-A1- 3 052 390
- JP-A- 2004 307 303
- US-A- 2 996 419
- US-A1- 2009 169 795
- US-B1- 6 258 429

## Beschreibung

Die Erfindung betrifft ein Verbundglas, ein Verbundsicherheitsglas, eine Laminierfolienanordung sowie ein Verfahren zur Herstellung einer Laminierfolienanordnung, eines Verbundglases oder eines Verbundsicherheitsglasses.

Aus dem Stand der Technik sind bereits einseitig durchsichtige Gläser oder Präsentationsmaterialien bekannt. Der Effekt der einseitigen Durchsichtigkeit beruht darauf, dass diese Gläser oder Schautafeln eine einseitig lichtabsorbierend beschichtete Schichtstruktur mit einer Vielzahl von Öffnungen aufweisen. Von dieser lichtabsorbierenden Seite betrachtet wirkt die Einlage durchsichtig, die andere Seite ist reflektierend ausgebildet und verhindert damit eine Durchsicht von dieser Seite. In US 2009/0169795 A1 sind derartige Schichtstrukturen beschrieben, die als Punktrasterfolie oder Gewebe ausgebildet sind, insbesondere als metallische Gewebe, die dann einseitig mit lichtabsorbierendem Material beschichtet werden. Weiterhin sind auch lichtabsorbierende Gewebe mit reflektierender Beschichtung bekannt.

Verbundgläser sind ein Verbund aus mindestens zwei Flachglasscheiben verbunden durch eine reißfeste und zähelastische Laminierfolie. Derartige Gläser werden insbesondere im Baubereich eingesetzt. Bei entsprechender Haftung werden Verbundgläser als Verbundsicherheitsgläser eingestuft. Das Deutsche Patent- und Markenamt hat in der Prioritätsanmeldung folgenden Stand der Technik betreffend Verbundgläser recherchiert:
DE 23 13 278 A und DE 20 2008 008 318 U1.Das Deutsche Patent- und Markenamt hat in der Prioritätsanmeldung auch DE 230 759 A und DD 2 95 720 A5 als Stand der Technik zu an sich bekannten reflektierenden Plättchen auf dem Gebiet der Bekleidung recherchiert. In DE 23 13 278 A ist ein Schichtstoff aus zwei Schichten aus einem lichtdurchlassigen Material und einer fest dazwischen haftenden Zwischenschicht aus einer optisch transparenten und Solarenergie reflektierenden Folie aus Polyvinylacetal (bspw. PVB) mit darin dispergierten lichtundurchlassigen Metallplättchen beschrieben.
Die Schichten aus lichtdurchlässigem Material bestehen aus Glas. In einem Beispiel ist angegeben, dass eine Zwischenschicht ein Schichtstoff aus einer optisch transparenten und Solarenergie reflektierenden Folie aus Polyvinylacetal mit darin dispergierten lichtundurchlassigen Metallplättchen und einer Folie aus einem organischen Polymer, die ein lichtabsorbierendes Pigment enthält, ist.

In JP 2004 307303 A ist allgemein eine ornamentale Platte als laminiertes Glas beschrieben, wobei ein zufälliges Muster aus festen streuenden Partikeln mittels eines Klebers eingebracht ist. In EP 2 248 676 A1 ist die Möglichkeit eines Gravurdrucks für eine dekorative Platte beschrieben.

Ausgangspunkt für jede Art von Glasfassade ist jedoch das einzelne Glas, entweder als Floatglas oder in vorgespannter Form als Einscheibensicherheitglas (ESG) oder als teilvorgespanntes Glas (TVG). Letzteres kommt aber nur als Verbund- oder Verbundsicherheitsglas zum Einsatz. Geht ein Einscheibensicherheitsglas (ESG) zu Bruch, zerfällt es in kleine, ca. 10 mm große Bruchstücke mit stumpfen Kanten. Geht ein teilvorgespanntes Glas (TVG) zu Bruch, bilden sich grössere Stücke und die Risse gehen zur Glaskante. Eine Resttragfähigkeit bleibt erhalten.

Ein Verbundsicherheitsglas weist mehrere Sicherheitsmerkmale (durchschlaghemmend, deutlich geringe Gefahr der Verletzung an Splittern, Resttragfähigkeit nach Teilzerstörung) gegenüber einer einfachen Flachglasscheibe auf, durch die im Verbundsicherheitsglas eingesetzte Laminierfolie, die in der Regel unter Wärme- und Druckeinfluss sowie teilweise unter Vakuum dauerhaft mit den Glasscheiben verbunden wird. Für die Einstufung eines Verbundglases als Verbundsicherheitsglas ist die Haftung innerhalb des Verbundes entscheidend.

Allgemein ist ein dekoratives Verbundglas in DE 10 2006 057 049 A1 oder in FR 3052390 A1 beschrieben.

Insbesondere für Fassadengestaltungen aber auch für Glaswände im Innenbereich besteht zunehmend die Anforderung nach nur vom Innenraum her durchsichtigen oder durchsehbaren Gläsern, die gleichzeitig den Sicherheitsanforderungen genügen. Gleichzeitig besteht gerade bei Architekten und Bauherren ein Bedürfnis nach möglichst großer Gestaltungsfreiheit bei der Ausgestaltung der Fassadenoptik.

Aus dem Stand der Technik, wie beispielsweise aus der US 2009/0169795 A1, bekannte Schichtstrukturen wie einseitig lichtabsorbierend beschichtete Gewebe oder Punktrasterfolien können zwar als Einlage in Verbundsicherheitsgläser eingesetzt werden, begrenzen aber die Haftung des Verbundes und können nur in begrenzten Breiten durchgängig hergestellt werden, was insbesondere bei großflächigen Glasfassadenelementen den Einsatz stark einschränkt. Beschichtete Gewebe sind zudem nur vollflächig und mit den gleichen Maschenöffnungen je Glasscheibe herstellbar. Hier setzt die Erfindung an deren Aufgabe es ist, ein Verbundglas oder Verbundsicherheitsglas zur Verfügung zu stellen, das einerseits höchsten Sicherheitsanforderungen genügt und andererseits eine optimierte Gestaltungsfreiheit für Fassaden- oder Innenraumgestaltung bietet.

Die Aufgabe wird gelöst durch ein einseitig durchsichtiges Verbundglas des Anspruchs 1.

Die Erfindung führt auch auf eine Laminierfolienanordnung des Anspruchs 13 zur Herstellung eines Laminierfolienverbundes für das einseitig durchsichtige Verbundglas der Erfindung.

Die Erfindung führt auch auf ein Verfahren des Anspruchs 14 zur Herstellung der Laminierfolienanordnung für den Laminierfolienverbund des einseitig durchsichtigen Verbundglases der Erfindung.

Dies wird gemäß einem ersten Aspekt der Erfindung erreicht durch ein Verbundglas umfassend eine erste und eine zweite Glasscheibe sowie eine zwischen der ersten und zweiten Glasscheibe angeordneten und mit diesen verbundenen Laminierfolienverbund mit einer ersten und einer zweiten Laminierfolie, dadurch gekennzeichnet, dass eine Vielzahl von Pailletten mit einer ersten lichtabsorbierenden Oberfläche zwischen der ersten und zweiten Laminierfolie angeordnet ist, wobei die Pailletten mit der lichtabsorbierenden Oberfläche der ersten Laminierfolie zugewandt sind und derart voneinander beabstandet angeordnet sind, dass das Verbundglas auf Seiten der lichtabsorbierenden Oberfläche der Pailletten betrachtet durchsichtig erscheint.

Bei dem einseitig durchsichtigen Verbundglas ist die erste und die zweite Glasscheibe sowie ein zwischen der ersten und zweiten Glasscheibe angeordneter und mit diesen verbundener Laminierfolienverbund mit einer ersten und einer zweiten Laminierfolie bevorzugt im Wesentlichen optisch transparent bzw. durchsichtig. Die Abstände zwischen der Vielzahl von beabstandet angeordneten Pailletten sind damit bevorzugt im Wesentlichen optisch transparent bzw. durchsichtig, sodass das Verbundglas nur in den Abständen weitgehend optisch transparent ist bzw. im Prinzip durchsichtig ist.

Lichtabsorbierende Strukturen, wie beispielweise schwarze oder dunkle Strukturen werden vom menschlichen Auge jedoch ausgeblendet, insbesondere wenn der Kontrast zu ihrer Umgebung groß ist, die Strukturen erscheinen für einen Betrachter farblich neutral zur Umgebung, sie werden nicht wahrgenommen.

Bei reflektierenden, hellen Strukturen ist dies anders; diese treten für einen Betrachter hervor. Dies führt dazu, dass beispielsweise eine Fensterscheibe mit einer Vielzahl schwarzer Streifen für einen Betrachter durchsehbar ist, er also die Umwelt hinter der Scheibe deutlich wahrnehmen kann; bei einer Vielzahl heller, also reflektierender Streifen dergleichen Anordnung der Betrachter aber die Streifen deutlich wahrnimmt und die Umwelt hinter der Scheibe für ihn eher nicht oder weniger wahrnehmbar ist. Die hellen Strukturen bilden dabei einen geringeren Kontrast zur Umgebung als die schwarzen, dadurch wird der Hintergrund hinter den hellen Strukturen schwächer wahrgenommen und verschwimmt mit den hellen Strukturen.

Die Erfindung schließt die Erkenntnis ein, über die Verwendung einer Vielzahl von Pailletten zwischen zwei Laminierfolien in einem Verbundglas einerseits eine gute Haftung zwischen den beiden Laminierfolien durch die im Vergleich zu Punktrasterfolien geringere Bedeckung und damit eine bessere Anbindung der Laminierfolien untereinander erreicht werden kann und darüber hinaus die Verwendung einzelner Pailletten, die im Unterschied zu den vorbekannten Punktrasterfolien oder Geweben keine untereinander verbundene Struktur besitzen, deutlich größere Freiheitsgrade bei Anordnung und Formen erlauben und damit die Gestaltungsfreiheit nur noch insoweit eingeschränkt ist, dass die nur einseitige Durchsichtigkeit erhalten bleibt. Darüberhinaus hat sich gezeigt, dass die Verwendung von Pailletten auch bei günstigen Standardlaminierprozessen die Problematik von Lufteinschlüssen und damit Trübungen im Verbundglas und Probleme mit der Haftung im Verbund reduziert, die durch die Kreuzpunkte von Kett- und Schussfaden bei Geweben gefördert werden. Die Verwendung von Pailletten erlaubt darüber hinaus auch eine einfache Fertigung von sich über den Verlauf einer Scheibe ändernden Strukturen, wie größeren Abständen zwischen Pailletten je höher die Fassade ist.

Unter Pailletten werden im Rahmen der vorliegenden Erfindung dünne ein- oder mehrlagige Plättchen verstanden. Lichtabsorbierend meint eine Absorption von sichtbaren Licht von mindestens 60%. Als lichtabsorbierend bezeichnete Strukturen oder Materialien erscheinen für das menschliche Auge schwarz oder jedenfalls sehr dunkel. Laminierfolien für Verbundgläser sind reißfest, zähelastisch, beispielswiese werden hier Polyvinylbutyral (PVB), Ethylenvinylacetat (EVA), Polyurethan (PU) oder lonoplaste oder lonomere, also Polymerwerkstoffe mit lonenbindungen zwischen den Makromolekülen neben den üblichen Nebenvalenzbindungen, eingesetzt.

Nachfolgend werden vorteilhafte Weiterbildungen der Erfindung beschrieben. Die zusätzlichen Merkmale der Ausführungsbeispiele können zur Bildung weiterer Weiterbildungen miteinander kombiniert werden, es sei denn, sie sind in der Beschreibung ausdrücklich als Alternativen zueinander beschrieben.

Bevorzugt ist das Verbundglas ein Verbundsicherheitsglas, weist also eine Haftung zwischen den einzelnen Bestandteilen auf, die eine Einstufung als Verbundsicherheitsglas erlaubt. Die erste und zweite Glasscheibe sind vorteilhaft als teilvorgespanntes Glas ausgebildet, es können im Rahmen der Erfindung sowohl Flachgläser als auch gebogene Gläser eingesetzt werden. Die Möglichkeit auch gebogene Gläser als Teil des Verbundes einzusetzen erhöht die Gestaltungsfreiheit für Fassaden weiter.

Vorteilhaft ist eine zweite Oberfläche der Pailletten, die der zweiten Laminierfolie zugewandt ist, lichtreflektierend, insbesondere metallisch reflektierend ausgebildet ist. Lichtreflektion an der zweiten Oberfläche der Pailletten trägt dazu bei, dass das Verbundglas von dieser Seite nicht oder stark reduziert durchsichtig erscheint. Gleichzeitig trägt die Art der Reflektion wie beispielsweise stark metallisch reflektierend oder vergleichsweise Matt zur Fassadengestaltung bei und kann individuell eingesetzt werden.

Bevorzugt weisen die Pailletten einen Schichtaufbau umfassend einen Dekorfilm und eine lichtabsorbierende Schicht auf. Dabei kann der Dekorfilm einen metallisch reflektierenden Polymerfilm, bevorzugt einen metallisch reflektierenden Polyesterfilm, umfassen. Die lichtabsorbierende Schicht ist bevorzugt eine lichtabsorbierende Kunststofffolie, insbesondere eine lichtabsorbierend lackierte oder lichtabsorbierend bedruckte Kunststofffolie, oder eine lichtabsorbierende Beschichtung des Dekorfilmes.

Bevorzugt ist die Kunststofffolie eine Polyesterfolie, insbesondere eine Polyethylentherephtalat-Folie. Polyesterfolien zeigen im Laminierprozess bei der Herstellung von Verbundgläsern besonders gute Stabilität, kaum Verzug und eine sehr gute Haftung zur Laminierfolie, so dass Formen der Vielzahl von Pailletten besonders gut über den Laminierprozess erhalten bleiben. Bevorzugt umfasst auch der Dekorfilm zusätzlich einen transparenten Polymerfilm und/oder eine farbige Beschichtung, wobei die farbige Beschichtung auf einer der lichtabsorbierenden Schicht gegenüberliegenden Seite des Dekorfilms angeordnet ist. Die farbige Beschichtung kann insbesondere eine über Drucktechniken, beispielsweise Sublimationsdruck oder Digitaldruck aufgebrachte Beschichtung sein, alternativ kann sie auch in Form eines Lacks aufgebracht sein.

Vorteilhaft weisen die Pailletten auf der lichtabsorbierenden Schicht auf einer vom Dekorfilm abgewandten Seite eine Kleberschicht auf. Dies ermöglicht zum einen im Herstellungsprozess eine einfache Befestigung der Pailletten auf der ersten Laminierfolie und durch die Aufbringung auf einer im späteren Einbauzustand einem Innenraum zugewandten Seite wird der Kleber darüberhinaus vor Zersetzung durch Sonneneinstrahlung geschützt. Der Kleber ist bevorzugt als Klebefilm mit einer Dicke von 40 bis 60 µm aufgetragen.

Vorteilhaft weisen Dekorfilm und lichtabsorbierende Schicht zusammen eine Schichtdicke zwischen 50 µm und 280 µm, insbesondere eine Schichtdicke zwischen 60 µm und 180 µm auf. Der Dekorfilm weist dabei bevorzugt eine Schichtdicke im Bereich von 20 bis 100 µm auf.

Bevorzugt kann der Dekorfilm und/oder eine lichtabsorbierende Schicht und/oder eine lichtreflektierende Schicht, insbesondere eine metallisch reflektierende Schicht, ein Schichtdicke auch deutlich darunter aufweisen, insbesondere in einem Bereich von 1 bis 20 µm aufweisen.

Es lassen sich vorzugsweise mittels einem Schichtverbund von Dekorfilm und/oder einer lichtabsorbierenden Schicht und/oder einer lichtreflektierenden Schicht Effekte von, insbesondere wechselnder oder schillernder, Mehrfarbigkeit an den Pailletten realisieren.

Es lassen sich vorzugsweise mittels einem Schichtverbund von Dekorfilm und/oder einer lichtabsorbierenden Schicht und/oder einer lichtreflektierenden Schicht 3D-Effekte oder sonstige räumliche Effekte an den Pailletten realisieren. Beispielsweise können optisch verzerrende konvexe oder konkave Erscheinungsbilder an den Pailletten realisiert werden, wie etwa Effekte gekrümmter spiegelnder optisch verzerrender, insbesondere konvexer oder konkaver, Erscheinungsbilder.

Die Effekte von Mehrfarbigkeit und 3D-Effekte, an den Pailletten können auch kombiniert werden mittels einem Schichtverbund von Dekorfilm und/oder einer lichtabsorbierenden Schicht und/oder einer lichtreflektierenden Schicht. In einer Weiterbildung weisen alle Pailletten der Vielzahl von Pailletten eine gleiche Form und Größe auf und sind regelmäßig angeordnet. Mit dieser Weiterbildung wird ein einheitliches Erscheinungsbild erreicht.

Alternativ können die Pailletten der Vielzahl von Pailletten aber auch unterschiedliche Größenabmessungen aufweisen und/oder unregelmäßig angeordnet sein. Dies erlaubt Anpassungen im Erscheinungsbild, beispielsweise dichtere Anordnungen oder großflächigere Bedeckungen, in sensibleren Bereichen der Fassaden oder größere Abstände oder kleinere Pailletten in anderen Bereichen zur Erhöhung des Lichteinfalls.

Auch können Form, Größe und Anordnung variiert werden zur Erzeugung bestimmter zusammenhängend erscheinender Formen des Gesamtbildes der Vielzahl von Pailletten auf der Außenfassade. Insbesondere ermöglicht die Nutzung von Pailletten auch einen Musterverlauf über eine Höhe oder Breite des Verbundglases, also beispielsweise dichtere Anordnungen von Pailletten in einem unteren Bereich einer Glasscheibe und weitere Anordnungen in einem oberen Bereich. Bevorzugt sind die Pailletten streifenförmig, rechteckig, rund oder oval ausgebildet.

In einer bevorzugten Variante dieser Weiterbildung können Verläufe von Form, Größe und Anordnung mit vorzugsweise stetig zunehmenden oder abnehmenden Tendenzen variiert werden. Beispielsweise kann in einer Vorzugsrichtung ein Verlauf der bevorzugt transparenten Abstände zwischen den Pailletten und/oder deren Form, Größe und/oder Anordnung mit zunehmender Tendenz oder abnehmender Tendenz variiert werden; also beispielsweise zunehmen oder abnehmen.

Die Größenabmessungen der Pailletten liegen bevorzugt in einem Bereich zwischen 2 bis 20 mm. Beispielsweise kann ein mittlerer Durchmesser von fleckenförmigen, insbesondere rundlichen oder eckigen, Pailletten in einem Bereich zwischen 2 bis 50 mm liegen, vorzugsweise in einem Bereich zwischen 2 bis 20 mm liegen. Beispielsweise kann eine mittlere Breite von ausgedehnten, insbesondere streifenartigen oder geradlinig oder gekrümmten ausgedehnten, Pailletten in einem Bereich zwischen 2 bis 50 mm liegen, vorzugsweise in einem Bereich zwischen 2 bis 20 mm liegen. Die sind Größenabmessungen der Pailletten sind jedoch nicht darauf beschränkt und können auch deutlich größer sein.

Die mittleren Abstände, insbesondere die mittleren optisch transparenten Abstände, zwischen der Vielzahl von beabstandet angeordneten Pailletten können in dem gleichen Bereich zwischen 2 bis 50 mm liegen, bevorzugt 2 bis 20 mm liegen, sind jedoch nicht darauf beschränkt und können auch deutlich größer sein.

In einer vorteilhaften Weiterbildung umfasst das Verbundglas zusätzlich eine zwischen der ersten und zweiten Laminierfolie angeordnete erste starre Kunststofffolie, wobei die Vielzahl von Pailletten auf einer Oberfläche der ersten starren Kunststofffolie aufgeklebt ist. Mit dieser Weiterbildung kann ein möglicher Verzug in der Anordnung der Vielzahl von Pailletten zwischen den Laminierfolien minimiert werden, in dem die Vielzahl von Pailletten auf der starren Kunststofffolie aufgeklebt sind. Die starre Kunststofffolie behält im Laminierprozess ihre Form und damit bleibt auch die Anordnung der Vielzahl von Pailletten weitgehend verzugsfrei erhalten. In anderen Ausführungsformen kann ein möglicher Verzug der Anordnung auch bei der initialen Anordnung der Vielzahl von Pailletten auf der ersten Laminierfolie miteinkalkuliert und darüber ausgeglichen werden, um eine gewünschte Anordnung im fertigen Verbundglas zu erreichen.

In einer Weiterbildung umfasst das Verbundglas weiter eine zweite starre Kunststofffolie, die mit der ersten starren Kunststofffolie derart verbunden ist, dass die Vielzahl von Pailletten zwischen der ersten und der zweiten starren Kunststofffolie angeordnet ist.

Bevorzugt ist die erste und/oder zweite starre Kunststofffolie eine Polyesterfolie, insbesondere eine Polyethylenterephthalatfolie (PET-Folie). Es hat sich auch als vorteilhaft erwiesen, dass die erste und/oder zweite starre Kunststofffolie eine Polycarbonatfolie oder eine Folie aus einem transparenten thermoplastischen Kunststoff ist; dies kann beispielsweise eine Folie aus Polymethylmethacrylat (Kurzzeichen PMMA, auch *Acrylglas*) sein.

In einer weiteren Weiterbildung umfasst das Verbundglas eine dritte Glasscheibe, wobei die dritte Glasscheibe und die erste oder zweite Glasscheibe über einen weiteren Laminierfolienverbund mit einer ersten und einer zweiten Laminierfolie und einer Vielzahl von Pailletten mit einer ersten lichtabsorbierenden Oberfläche verbunden sind. Mit dieser Ausführungsform können zum einen die Sicherheitsaspekte des Verbundglases im Vergleich zu einer Ausführungsform mit nur zwei Glasscheiben und einem Laminierfolienverbund weiter verbessert werden, zum anderen erlaubt die Verwendung eines weiteren Laminierfolienverbundes mit Pailletten eine dreidimensionale Fassadengestaltung durch die Anordnung von Pailletten in unterschiedlichen Ebenen.

In einem Einbauzustand sind Verbundgläser gemäß dem ersten Aspekt der Erfindung bevorzugt derart angeordnet, dass die erste Laminierfolie einem Innenraum zugewandt ist und die zweite Laminierfolie einem Außenraum. Darüber wird sichergestellt, dass das Verbundglas Blicke nach draußen zulässt, Blicke nach innen aber verhindert.

Gemäß einem zweiten Aspekt betrifft die Erfindung eine Laminierfolienanordnung zur Herstellung eines Laminierfolienverbundes für ein Verbundsicherheitsglas oder Verbundglas gemäß dem ersten Aspekt umfassend eine Laminierfolie und eine Vielzahl von Pailletten mit einer ersten lichtabsorbierenden Oberfläche, die auf der ersten Laminierfolie befestigt, sind als Halbzeug für die Herstellung eines erfindungsgemäßen Verbundglases oder eines Verbundsicherheitsglases. Die Laminierfolienanordnung sowie die nachfolgend beschriebenen Verfahren zur Herstellung einer Laminierfolienanordnung und eines Verbundglases teilen die Vorteile des Verbundglases gemäß dem ersten Aspekt der Erfindung.

Gemäß einem dritten Aspekt betrifft die Erfindung ein Verfahren zur Herstellung einer Laminierfolienanordnung für einen Laminierfolienverbund eines Verbundsicherheitsglases oder Verbundglases umfassend die Schritte:
- Bereitstellen eines Dekorfilms
- Einseitiges Aufbringen einer lichtabsorbierenden Schicht auf dem Dekorfilm zur Herstellung eines Schichtaufbaus
- Stanzen oder Zuschneiden einer Vielzahl von Pailletten aus dem Schichtaufbau
- Übertragen der Vielzahl von Pailletten auf eine erste Laminierfolie

Bevorzugt erfolgt das einseitige Aufbringen einer lichtabsorbierenden Schicht als Anordnen und Befestigen einer lichtabsorbierenden Kunststofffolie auf dem Dekorfilm. In einer alternativen Ausführungsform wird der Dekorfilm lichtabsorbierend beschichtet, insbesondere lackiert.

In einer Weiterbildung umfasst das Verfahren zusätzlich:
- Herstellen eines Dekorfilmes umfassend die Schritte:
- Bereitstellen eines metallisch reflektierenden Polymerfilmes,
- Farbiges Beschichten des metallisch reflektierenden Polymerfilmes und/oder Verbinden des metallisch reflektierenden Polymerfilmes mit einem, insbesondere transparenten, Polymerfilm.

In einer Weiterbildung werden beim Übertragen der Vielzahl von Pailletten diese direkt auf die erste Laminierfolie übertragen oder alternativ zunächst auf eine erste starre Kunststofffolie übertragen und dann zusammen mit der ersten starren Kunststofffolie auf die erste Laminierfolie übertragen werden. Bevorzugt erfolgt dabei ein Applizieren und Kleben der Pailletten auf die erste starre Kunststofffolie oder die erste Laminierfolie. In einer Ausführungsform umfasst das Verfahren zusätzlich Aufbringen einer Kleberschicht auf der lichtabsorbierenden Schicht.

Gemäß einem vierten Aspekt betrifft die Erfindung ein Verfahren zur Herstellung eines Verbundglases umfassend die Schritte:
- Bereitstellen einer Laminierfolienanordnung hergestellt nach einem Verfahren gemäß dem dritten Aspekt der Erfindung
- Anordnen einer zweiten Laminierfolie zur Bildung eines Laminierfolienverbundes, derart, dass sich die Vielzahl der Pailletten zwischen der ersten und zweiten Laminierfolie befindet
- Bereitstellen zweier Glasscheiben
- Einbringen des Laminierfolienverbundes zwischen die Glasscheiben und Laminieren des Verbundglases.

Mit demselben Verfahren kann auch ein Verbundsicherheitsglas hergestellt werden

Das Laminieren des Verbundglases erfolgt dabei im Autoklaven oder im Laminierofen unter Einwirkung von Wärme, Druck und/oder Vakuum.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 eine schematische Darstellung des Aufbaus einer Ausführungsform eines Verbundglases gemäß dem ersten Aspekt der Erfindung;
Fig. 2 eine schematische Darstellung des Aufbaus einer weiteren Ausführungsform eines Verbundglases gemäß dem ersten Aspekt der Erfindung;
Fig. 3 eine schematische Darstellung des Aufbaus einer weiteren Ausführungsform eines Verbundglases gemäß dem ersten Aspekt der Erfindung;
Fig. 4 beispielhaft eine Vielzahl von Pailletten auf einer starren Kunststofffolie;
Fig. 5 beispielhaft eine Ausführungsform eines Verbundglases;
Fig. 6 ein Ablaufdiagramm eines Verfahrens zur Herstellung eines Verbundglases gemäß dem vierten Aspekt der Erfindung;
Fig. 7 eine schematische Darstellung des Aufbaus einer weiteren Ausführungsform eines Verbundglases gemäß dem ersten Aspekt der Erfindung;
Fig. 8 ein Beispiel für eine Ausführungsform eines Verbundglases bei dem ein einheitliches Erscheinungsbild erreicht ist;
Fig. 9A, Fig.9B, Fig.9C, Fig.9D ein Beispiel für ein Verbundglas an einer Fassade, bei dem unter Erreichung eines angepassten Erscheinungsbildes die Pailletten der Vielzahl von Pailletten unterschiedliche Größenabmessungen aufweisen und/oder unregelmäßig angeordnet sind;
Fig. 10 ein Beispiel einer Fassade mit einem Verbundglas ähnlich dem in Fig.9A und Fig.9C.

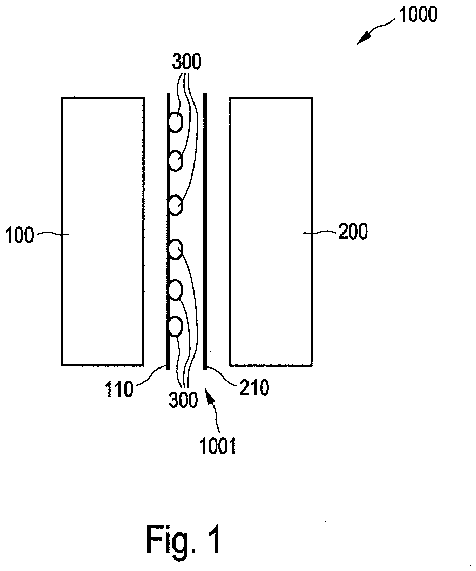

Fig. 1 zeigt eine schematische Darstellung des Aufbaus einer Ausführungsform eines Verbundglases 1000 gemäß dem ersten Aspekt der Erfindung. Das Verbundglas 1000 ist hier in einer teilweisen Explosionsdarstellung gezeigt. Das Verbundglas 1000 umfasst eine erste Glasscheibe 100 sowie eine zweite Glasscheibe 200. Zwischen der ersten Glasscheibe 100 und der zweiten Glasscheibe 200 ist ein Laminierfolienverbund 1001 angeordnet mit einer ersten Laminierfolie 110 und einer zweiten Laminierfolie 210. Der Laminierfolienverbund ist mit der ersten und zweiten Glasscheibe 100, 200 verbunden. Zwischen der ersten Laminierfolie 110 und der zweiten Laminierfolie 210 ist eine Vielzahl von Pailletten 300 angeordnet. Jede der Pailletten weist dabei eine lichtabsorbierende Oberfläche auf und ist mit dieser lichtabsorbierenden Oberfläche der ersten Laminierfolie 110 zugewandt. In der gezeigten Ausführungsform weisen die Pailletten 300 einen Schichtaufbau umfassend einen Dekorfilm und eine lichtabsorbierende Schicht auf, sowie eine Kleberschicht, die auf einer dem Dekorfilm abgewandten Seite der lichtabsorbierenden Schicht aufgebracht ist und mit der die Pailletten auf der ersten Laminierfolie 110 befestigt sind. Die lichtabsorbierende Schicht ist hier eine schwarze Beschichtung des Dekorfilms. Die Pailletten 300 sind dabei derart von einander beabstandet angeordnet, dass das Verbundglas 1000 auf Seiten der lichtabsorbierenden Oberfläche der Pailletten betrachtet durchsichtig erscheint. Das heißt, mit Blickrichtung von der ersten Glasscheibe 100 zur zweiten Glasscheibe 200 erscheint das Verbundglas 1000 für einen Betrachter durchsichtig, da der Betrachter die lichtabsorbierenden Pailletten automatisch ausblendet. In der gezeigten Ausführungsform weisen die Pailletten auf der der zweiten Laminierfolie 210 zugewandten Seite den Dekorfilm auf, der hier metallisch reflektierend ausgebildet ist. Von Seiten der zweiten Glasscheibe 200 in Richtung der ersten Glasscheibe 100 betrachtet, erscheint das Verbundglas für einen Betrachter daher nicht durchsichtig. Hier werden die reflektierenden Strukturen der Pailletten deutlich wahrgenommen und erschweren damit den Blick durch das Verbundglas 1000. Das Verbundglas 1000 kann in einer Ausführungsform auch als Verbundsicherheitsglas ausgebildet sein.

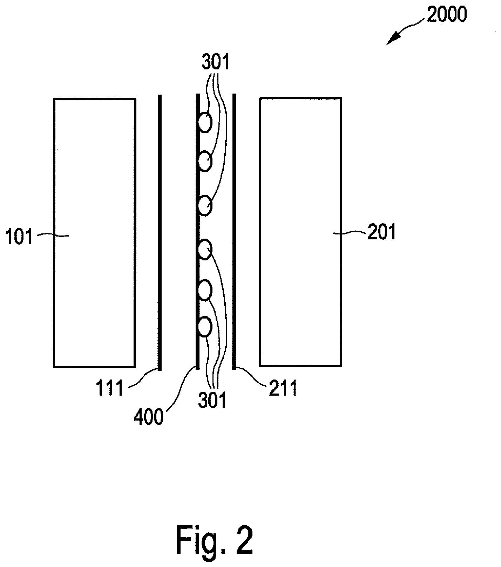

Fig. 2 zeigt in einer schematischen Darstellung den Aufbau einer weiteren Ausführungsform eines Verbundglases gemäß dem ersten Aspekt der Erfindung. Der Aufbau, der hier gezeigten Ausführungsform des Verbundglases 2000 ähnelt dem in Figur 1 dargestellten Verbundglas 1000. Daher wird im Folgenden vorwiegend auf die Unterscheide eingegangen. Wie bereits im Hinblick auf Fig. 1 beschrieben, weist das Verbundglas 2000 eine erste Glasscheibe 101 und eine zweite Glasscheibe 201 auf, zwischen denen ein Laminierfolienverbund, aufweisend eine erste Laminierfolie 111 und eine zweite Laminierfolie 211, angeordnet ist. Im Unterschied zur Ausführungsform der Figur 1, sind hier die Pailletten 301 nicht unmittelbar auf der ersten Laminierfolie 111 angeordnet und mit dieser verklebt, sondern auf einer ersten starren Kunststofffolie 400. Diese erste starre Kunststofffolie 400 ist starr ausgebildet, das heißt, sie behält im Laminierprozess ihre Form und die Anordnung der Vielzahl von Pailletten, wie sie eingangs des Herstellungsprozesses erfolgt, bleibt auch über den Laminierschritt weitgehend verzugsfrei erhalten. Die erste starre Kunststofffolie ist in der gezeigten Ausführungsform eine Polyesterfolie, hier eine Polyethylentherephtalat-Folie. Wie bereits im Hinblick auf Fig. 1 beschrieben, sind die Pailletten 301 eine Schichtstruktur aus Dekorfilm und lichtabsorbierender Schicht, wobei die lichtabsorbierende Schicht hier eine schwarz lackierte Polyesterfolie ist. In der gezeigten Ausführungsform weist der Dekorfilm eine Stärke von 23 µm auf, während die schwarz lackierte Kunststofffolie eine Stärke von 125 µm aufweist. Die Pailletten 301 sind über einen Klebefilm auf die starre Kunststofffolie 400 aufgeklebt. Der Klebefilm weist in der gezeigten Ausführungsform eine Stärke von 50 µm auf.

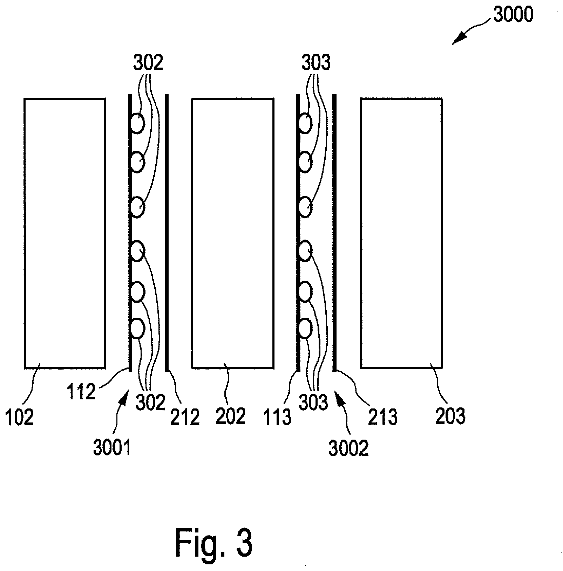

In Fig. 3 ist der Aufbau einer weiteren Ausführungsform eines Verbundglases 3000 in einer schematischen Darstellung gezeigt. Zusätzlich zum in Fig. 1 gezeigten Aufbau umfasst das Verbundglas 3000 eine dritte Glasscheibe 203 sowie einen weiteren Laminierfolienverbund 3002, über den die dritte Glasscheibe 203 mit der zweiten Glasscheibe 202 verbunden ist. Auf der von der dritten Glasscheibe 203 abgewandten Seite der zweiten Glasscheibe 202 ist wie in Fig. 1 eine erste Glasscheibe 102 angeordnet, die ebenfalls über einen Laminierfolienverbund 3001, umfassend eine erste Laminierfolie 112 und eine zweite Laminierfolie 212, zwischen denen eine Vielzahl von Pailletten 302 angeordnet ist, verbunden. Der weitere Laminierfolienverbund 3002 umfasst ebenfalls eine erste Laminierfolie 113 und eine zweite Laminierfolie 213, zwischen denen eine Vielzahl von Pailletten 303 angeordnet ist. Diese sind derart beabstandet, dass das Verbundglas von Seiten der ersten Glasscheibe 102 in Richtung der dritten Glasscheibe 203 betrachtet weiterhin durchsichtig erscheint. Die Pailletten 302 des Laminierfolienverbundes 3001 und die Pailletten 303 des weiteren Laminierfolienverbundes 3002 sind dabei mit ihrer lichtabsorbierenden Oberfläche jeweils der ersten Laminierfolie 112, 113 zugewandt, und damit beide der ersten Glasscheibe 102 zugewandt. Der Einsatz dreier Glasscheiben erhöht zum einen die Festigkeit des Verbundglases insgesamt und ermöglicht es, auch in Fällen etwas geringerer Haftung zwischen Laminierfolienverbund und Glasscheiben ein zertifiziertes Sicherheitsglas zu erhalten. Zum anderen können über die Anordnung der Pailletten 302, 303 in zwei Ebenen räumliche Effekte erzielt werden, die der Gestaltungsfreiheit einer Glasfassade weiter entgegenkommen.

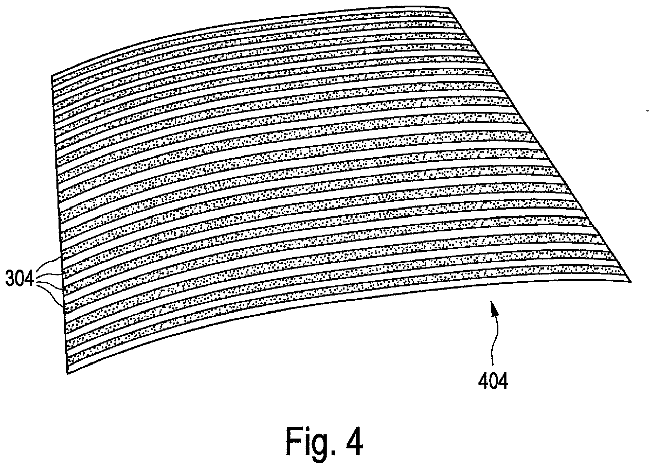

In Fig. 4 ist beispielhaft eine Vielzahl von Pailletten 304 auf einer ersten starren Kunststofffolie 404 dargestellt. Die hier gezeigten Pailletten sind regelmäßig aufgebracht, streifenförmig und weisen sowohl dieselbe Breite auf als auch einen voneinander gleichbleibenden Abstand. In der hier gezeigten Darstellung ist die metallisch reflektierende Oberfläche der Pailletten zu sehen, die in einem erfindungsgemäßen Verbundglas der zweiten Laminierfolie zugewandt wäre.

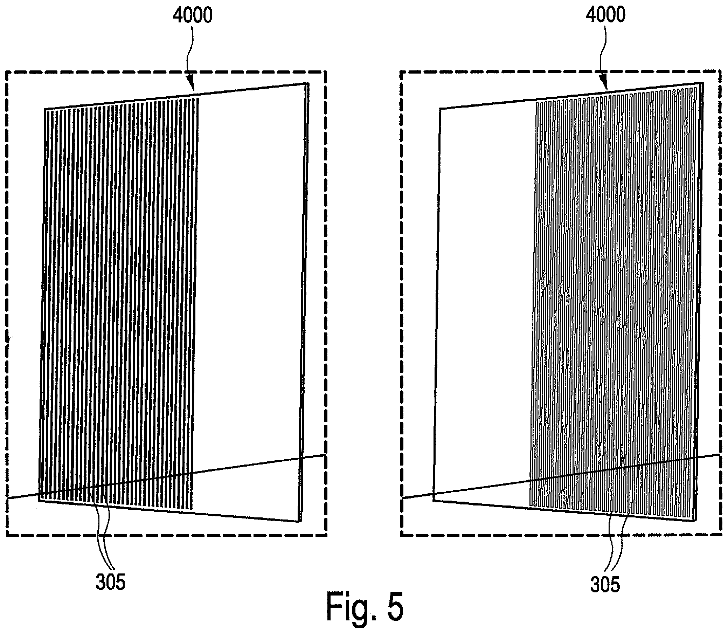

Fig. 5 zeigt in einer Innen- und Außenansicht ein Verbundglas gemäß dem ersten Aspekt der Erfindung. In der linken Darstellung ist das Verbundglas 4000 in einer Außenansicht dargestellt, bei der die reflektierende Oberfläche der Pailletten 305 zu sehen ist, die zweite Glasscheibe ist also dem Betrachter zugewandt. Der mit den Pailletten 305 versehene Teil des Verbundglases 4000 erscheint in dieser Ansicht weniger durchsichtig, der Blick des Betrachters wird von den reflektierenden Pailletten 305 abgelenkt. Hingegen ist auf der rechten Seite eine Innenansicht des Verbundglases 4000 zu sehen, also die zweite Glasscheibe dem Betrachter zugewandt. Hier ist dem Betrachter die lichtabsorbierende Oberfläche der Pailletten 305 zugewandt. Diese wird vom Betrachter aufgrund des starken Kontrastes zur Umgebung ausgeblendet, sodass für den Betrachter das Verbundglas 4000 hier durchsichtiger erscheint.

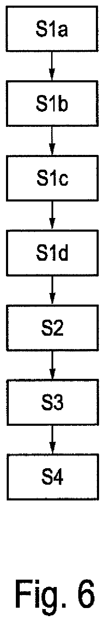

Fig. 6 zeigt ein Ablaufdiagramm eines Verfahrens zur Herstellung eines Verbundglases gemäß dem vierten Aspekt der Erfindung. Das Verfahren umfasst zunächst die Bereitstellung einer Laminierfolienanordnung für einen Laminierfolienverbund des Verbundglases. Dabei wird die Laminierfolienanordnung gemäß der Schritte S1 a bis S1d hergestellt. In Schritt S1a wird ein Dekorfilm bereitgestellt, auf dem in Schritt 1b einseitig eine lichtabsorbierende Schicht zur Herstellung eines Schichtaufbaus aufgebracht wird. Die lichtabsorbierende Schicht kann dabei als Beschichtung aufgebracht werden oder über das Anordnen und Befestigen einer lichtabsorbierenden Kunststofffolie auf dem Dekorfilm erfolgen. In Schritt S1c wird eine Vielzahl von Pailletten aus dem Schichtaufbau gestanzt oder zugeschnitten. In Schritt S1d wird die Vielzahl von Pailletten auf eine Laminierfolie übertragen. Optional wird vor oder nach dem Stanzen oder Zuschneiden der Vielzahl von Pailletten ein Klebefilm auf die Pailletten, oder im Falle der Aufbringung vor dem Stanzen und Zuschneiden auf den Schichtaufbau, auf Seiten der lichtabsorbierenden Schicht aufgebracht.

Nach dem Bereitstellen der Laminierfolienanordnung über die Schritte S1a bis S1d erfolgt in Schritt S2 ein Anordnen einer zweiten Laminierfolie zur Bildung eines Laminierfolienverbundes derart, dass sich die Vielzahl der Pailletten zwischen der ersten und zweiten Laminierfolie befindet. In Schritt S3 werden dann zwei Glasscheiben bereitgestellt, zwischen die in Schritt S4 der Laminierfolienverbund eingebracht wird. Sodann erfolgt ebenfalls in Schritt S4 ein Laminieren des Verbundglases. Das Laminieren erfolgt dabei unter Wärme, Druck und/oder Vakuum.

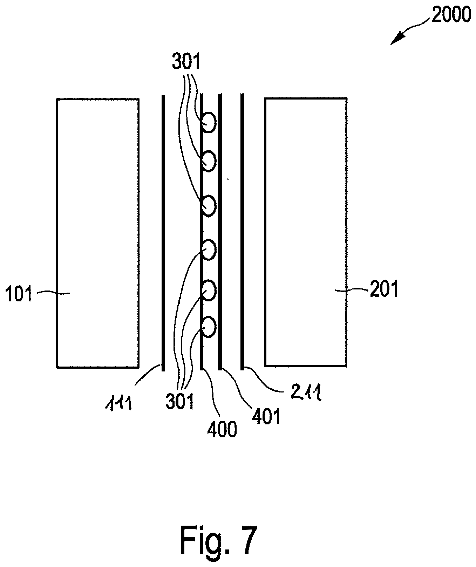

Fig. 7 zeigt in einer schematischen Darstellung den Aufbau einer weiteren Ausführungsform eines Verbundglases 2000 gemäß dem ersten Aspekt der Erfindung. Der Aufbau entspricht im Wesentlichen dem in Fig. 2 dargestellten. Das hier dargestellte Verbundglas weist zusätzlich eine zweite starre Kunststofffolie 401, die mit der ersten starren Kunststofffolie 400 derart verbunden ist, dass die Vielzahl von Pailletten zwischen der ersten und der zweiten starren Kunststofffolie angeordnet ist. Weiter weist auch hier das Verbundglas 2000 eine erste Glasscheibe 101 und eine zweite Glasscheibe 201 auf, zwischen denen ein Laminierfolienverbund, aufweisend eine erste Laminierfolie 111 und eine zweite Laminierfolie 211, angeordnet ist. Die Pailletten 301 sind auf der ersten starren Kunststofffolie 400 aufgeklebt. Die erste starre Kunststofffolie 401 und die zweite starre Kunststofffolie sind in der gezeigten Ausführungsform jeweils eine Polyesterfolie, hier eine Polyethylentherephtalat-Folie. Die Pailletten 301 weisen eine Schichtstruktur auf aus Dekorfilm und lichtabsorbierender Schicht, wobei die lichtabsorbierende Schicht hier eine schwarz lackierte Polyesterfolie ist.

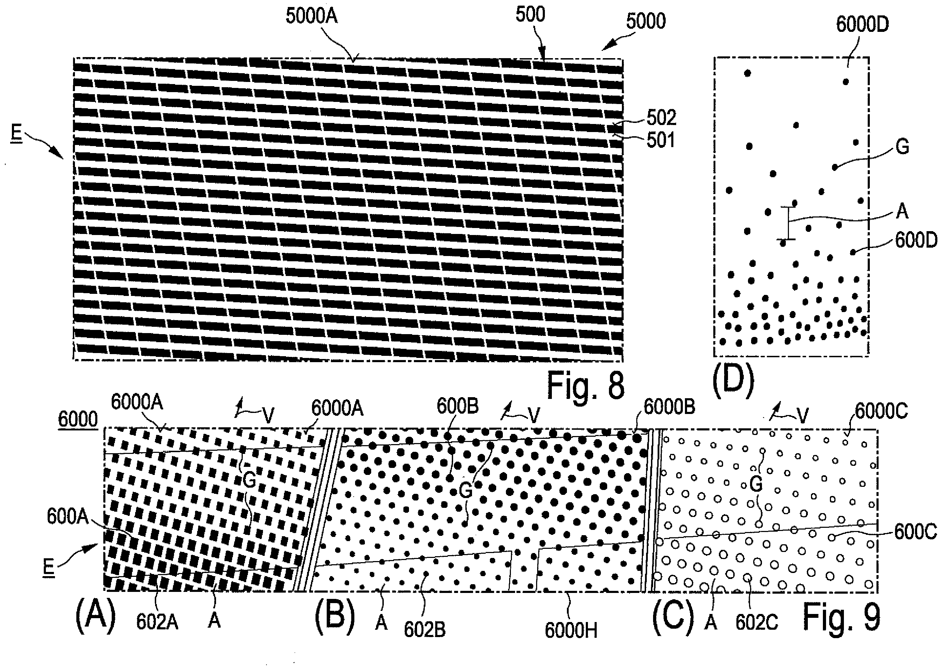

Fig. 8 zeigt ein Beispiel für ein Verbundglas 5000, bei dem unter Erreichung eines einheitlichen Erscheinungsbildes E alle Pailletten der Vielzahl von Pailletten 500 eine gleiche Form und Größe aufweisen und regelmäßig angeordnet sind. Die Pailletten 500 sind zwischen einer hier nicht erkennbaren ersten und zweiten Laminierfolie angeordnet, analog wie dies im Prinzip anhand einer der vorhergehenden Figuren erläutert ist. Bei diesem Beispiel ist die hier gezeigte ersichtliche zweite Oberfläche 502 der Pailletten 500, die der zweiten Laminierfolie zugewandt ist, metallisch reflektierend ausgebildet; die andere (nicht ersichtliche) erste Oberfläche 501 der Pailletten 500, die der ersten Laminierfolie zugewandt ist, ist vorliegend schwarz ausgebildet.

Die Außenseite 5000A einer (hier nicht insgesamt gezeigten) Fassade mit einem solchen Verbundglas 5000 ist somit vergleichsweise blickdicht d.h. von einem Außenraum ist das Verbundglas undurchsichtiger und von einem Innenraum relativ durchsichtiger; also wie erläutert im Prinzip einseitig von einem Innenraum durchsichtig. Der weitere damit erreichte technische Effekt liegt in einer optischen Auflösung der Strukturen einer Gebäude-Innen- oder Außen-Fassade mit dem dergestalt ausgebildeten einseitig durchsichtigen Verbundglas.

Fig. 9 zeigt ein Beispiel für ein Verbundglas 6000A, 6000B, 6000C an einer Fassade 6000, bei dem unter Erreichung eines angepassten Erscheinungsbildes E die Pailletten 600A, 600B, 600C der Vielzahl von Pailletten jeweils untereinander unterschiedliche Größenabmessungen aufweisen. Zusätzlich oder alternativ können die Pailletten bei einem Verbundglas unregelmäßig angeordnet sind; letzteres ist bei den Pailletten 600D im Verbundglas 6000D der Fall.

Beispielsweise kann in einer Vorzugsrichtung ein Verlauf V der bevorzugt transparenten Abstände A zwischen den Pailletten 600D und/oder die Form, Größe und/oder Anordnung G der Pailletten 600A, 600B, 600C mit zunehmender Tendenz oder abnehmender Tendenz variiert werden; also beispielsweise zunehmen oder abnehmen.

In Fig. 9A bis Fig.9C sind die transparenten Abstände A zwischen den Pailletten 600A, 600B, 600C -in Fig.9A sind die Pailletten 600A in der Form rechteckig, in Fig.9B und Fig.9C sind die Pailletten 600B, 600C in der Form rund-- jeweils dazu vergleichsweise konstant und die Pailletten 600A, 600B, 600C sind regelmäßig angeordnet; jedoch ist in Fig.9A und Fig.9C der Verlauf V einer Größe der Pailletten 600A, 600C stetig abnehmend von etwa unten nach oben variiert und in Fig.9B ist der Verlauf V einer Größe der Pailletten 600B stetig zunehmend von etwa unten nach oben variiert.

Der damit erreichte technische Effekt liegt zu dem einseitig durchsichtigen Verbundglas auch in einer optischen Streckung bzw. Stauchung von Abmessungen an einer Gebäude-Innen- oder Außen-Fassade mit dem dergestalt ausgebildeten (von innen) einseitig durchsichtigen Verbundglas. Außerdem ist bei den nebeneinander angeordneten Elementen von Verbundglas 6000A, 6000B, 6000C bei der Gesamtfassade 6000 in unterschiedlicher Ausprägung zu erkennen, dass der Hintergrund 6000H hinter der Gesamtfassade 6000; also gesehen durch die Außenseite 6000V der Gesamtfassade 6000 nicht mehr bzw. nur noch abgeschwächt zu erkennen ist aufgrund der zum Außenraum gewandten, also zur Außenseite 6000V der Gesamtfassade 6000 gerichteten reflektierenden zweiten Oberfläche 602A, 602, B, 602C der Pailletten 600A, 600B, 600C.ln Fig. 9D ist ein Beispiel gezeigt, bei dem die transparenten Abstände A zwischen den Pailletten 600D -in Fig.9D sind die Pailletten 600D in der Form rund-- nicht konstant und die Pailletten 600D sind unregelmäßig angeordnet. Die transparenten Abstände A nehmen von etwa unten nach oben zu und die Größenabmessungen G der Pailletten 600D bleiben aber dabei konstant.

Der damit erreichte technische Effekt zu dem einseitig durchsichtigen Verbundglas liegt auch in einer optischen Verdeckung regelmäßiger Strukturen an einer Gebäude- Innen- oder Außen-Fassade mit dem dergestalt ausgebildeten (von innen) einseitig durchsichtigen Verbundglas 6000D und außerdem ergibt sich ein von etwa unten nach oben zunehmende Verlauf V von einem (von innen) einseitig durchsichtigen Verbundglas zu einem beidseitig durchsichtigen Verbundglas 6000D; d.h. hin zu einem auch von außen durchsichtigen Verbundglas 6000D.

Bei diesen Ausführungsformen der Fig.9 können die Größenabmessungen der Pailletten 600A, 600B, 600C, 600D bevorzugt in einem Bereich zwischen 2 bis 20 mm liegen. Beispielsweise kann ein mittlerer Durchmesser von in der Form fleckenförmigen, insbesondere in der Form rundlichen oder eckigen, Pailletten 600A, 600B, 600C, 600D in einem Bereich zwischen 2 bis 50 mm liegen, vorzugsweise in einem Bereich zwischen 2 bis 20 mm liegen.

Beispielsweise kann in einer anderen Ausführungsform ähnlich der Fig.4 oder Fig.5 eine mittlere Breite von in der Form ausgedehnten, insbesondere in der Form streifenartigen oder geradlinig oder gekrümmt ausgedehnten, Pailletten 304, 305 in einem Bereich zwischen 2 bis 50 mm liegen, vorzugsweise in einem Bereich zwischen 2 bis 20 mm liegen. Die Größenabmessungen der Pailletten sind jedoch nicht darauf beschränkt und diese können auch deutlich größer sein.

Die mittleren Abstände A, insbesondere die mittleren optisch transparenten Abstände A, zwischen der Vielzahl von beabstandet angeordneten Pailletten 600A, 600B, 600C, 600D können in dem gleichen Bereich zwischen 2 bis 50 mm liegen, bevorzugt 2 bis 20 mm liegen, sind jedoch nicht darauf beschränkt und können auch deutlich größer sein.

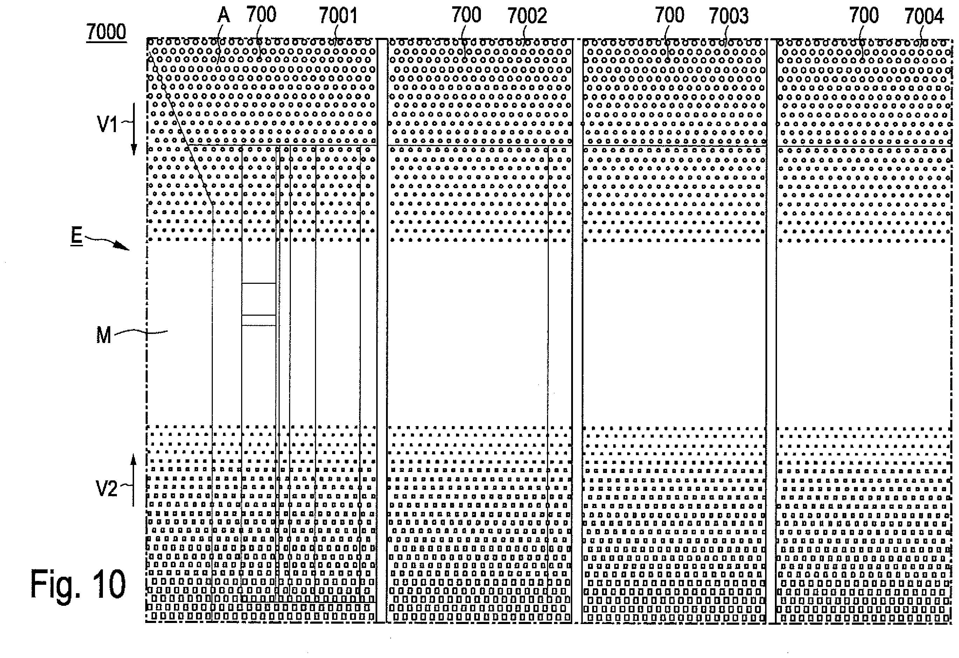

Fig. 10 zeigt ein Beispiel einer Fassade 7000 mit Elementen eines Verbundglases 7001, 7002, 7003 7004 usw. ähnlich dem Verbundglas 6000A, 6000B, 6000C in Fig.9A und Fig.9C; d.h. bei dem Verbundglas 7002, 7003 7004 usw. weisen jeweils unter Erreichung eines angepassten Erscheinungsbildes E die Pailletten 700 der Vielzahl von Pailletten unterschiedliche Größenabmessungen und Formen G in einem Verlauf V1, V2 auf und haben zunächst regelmäßige Abstände A.

Der Verlauf der Reflektivität nimmt und der Verlauf einer Größe der Pailletten 700 ist stetig abnehmend in einem Verlauf V2, der variiert von etwa unten nach oben und in einem Verlauf V1, der variiert von etwa oben nach unten.

Dieses Beispiel zeigt, dass ganz allgemein und unabhängig von dem vorliegenden Beispiel außer der genannten Form, Größe und Abstand auch die optische Erscheinungsform oder der optische Effekt der Pailletten variiert werden kann.

Der damit erreichte technische Effekt zu dem einseitig durchsichtigen Verbundglas liegt auch in einem optischen von etwa unten nach oben zunehmenden Verlauf V2 von einem einseitig durchsichtigen Verbundglas zu einem beidseitig durchsichtigen Verbundglas (also auch von außen durchsichtigen Verbundglas) in der Mitte M der Fassade; wie dies als Erscheinungsbild E in Fig.10 erkennbar ist, wird der gleiche Effekt spiegelverkehrt von einer oberen Seite der Fassade 7000 erreicht, d.h. ein Verlauf V1 von einem einseitig durchsichtigen Verbundglas zu einem beidseitig durchsichtigen Verbundglas (also auch von außen durchsichtigen Verbundglas) in der Mitte M der Fassade 7000.

### Bezuqszeichenliste

- 1000; 2000; 3000; 4000;: Verbundglas
- 5000, 6000A, 6000B, 6000C, 6000D: Verbundglas
- 6000, 7000: Fassade
- 1001; 3001; 3002;: Laminierfolienverbund
- 100; 101; 102: erste Glasscheibe
- 200; 201; 202: zweite Glasscheibe
- 203: dritte Glasscheibe
- 110; 111; 112; 113: erste Laminierfolie
- 210; 211; 212; 213: zweite Laminierfolie
- 300; 301; 302; 303; 304; 305: Pailletten
- 400; 404: erste starre Kunststofffolie
- 401: zweite starre Kunststofffolie
- 500: Pailletten
- 501: erste Oberfläche der Pailletten 500
- 502: zweite Oberfläche der Pailletten 500
- 600A, 600B, 600C, 600D, 700: Pailletten
- 602A, 602B, 602C: zweite Oberfläche der Pailletten 600A, 600B, 600C
- G: die Form, Größe und/oder Anordnung der Pailletten
- A: mittlere transparente Abstände
- V, V1, V2: Verlauf
- E: Erscheinungsbild
- M: Mitte der Fassade
- 6000H, 6000V: Hintergrund, Außenseite der Fassade 6000

## Patentansprüche

1. Einseitig durchsichtiges Verbundglas (1000, 2000, 3000, 4000, 5000, 6000A, 6000B, 6000C, 6000D) für einen Einbauzustand bei Fassaden (6000, 7000) oder eine Innenraumgestaltung, insbesondere Verbundsicherheitsglas, umfassend eine erste und eine zweite Glasscheibe (100, 101, 102, 200, 201, 202) sowie einen zwischen der ersten und zweiten Glasscheibe angeordneten und mit diesen verbundenen Laminierfolienverbund (1001, 3001, 3002) mit einer ersten Laminierfolie (110, 111, 112, 113) und einer zweiten Laminierfolie (210, 211, 212, 213),
**dadurch gekennzeichnet, dass**
- eine Vielzahl von Pailletten (300, 301, 302, 303, 304, 305, 500, 600A, 600B, 600C, 600D, 700) mit einer ersten lichtabsorbierenden Oberfläche (501) zwischen der ersten Laminierfolie und zweiten Laminierfolie unter Erreichung eines Erscheinungsbildes (E) angeordnet ist, wobei
- die Pailletten mit der lichtabsorbierenden Oberfläche (501) der ersten Laminierfolie zugewandt sind und derart voneinander beabstandet angeordnet sind, dass das Verbundglas auf Seiten der lichtabsorbierenden Oberfläche (501) der Pailletten betrachtet durchsichtig erscheint,
wobei eine zweite Oberfläche (502) der Pailletten, die der zweiten Laminierfolie zugewandt ist, lichtreflektierend ausgebildet ist, wobei das Verbundglas auf Seiten der lichtreflektierenden Oberfläche (502) der Pailletten betrachtet weniger durchsichtig erscheint.

2. Verbundglas nach Anspruch 1, bei dem in dem Einbauzustand die erste Laminierfolie (110, 111, 112, 113) vorgesehen ist, einem Innenraum zugewandt zu sein und die zweite Laminierfolie (210, 211, 212, 213) vorgesehen ist, einem Außenraum zugewandt zu sein.

3. Verbundglas nach Anspruch 1 oder 2, bei dem eine Form, Größe und Anordnung der Vielzahl von Pailletten variierbar ist zur Erzeugung bestimmter zusammenhängend erscheinender Formen eines Gesamtbildes im Erscheinungsbild der Vielzahl von Pailletten zum Außenraum.

4. Verbundglas nach einem der vorstehenden Ansprüche 1 bis 3, bei dem
- unter Erreichung eines einheitlichen Erscheinungsbildes alle Pailletten der Vielzahl von Pailletten eine gleiche Form und Größe aufweisen und regelmäßig angeordnet sind, oder
unter Erreichung eines angepassten Erscheinungsbildes die Pailletten der Vielzahl von Pailletten unterschiedliche Größenabmessungen aufweisen und/oder unregelmäßig angeordnet sind.

5. Verbundglas nach einem der vorstehenden Ansprüche, bei dem die zweite Oberfläche der Pailletten, die der zweiten Laminierfolie zugewandt ist, metallisch reflektierend ausgebildet ist und/oder bei dem die erste Oberfläche der Pailletten, die der ersten Laminierfolie zugewandt ist, schwarz ausgebildet ist.

6. Verbundglas nach einem der vorstehenden Ansprüche, bei dem die Pailletten einen Schichtaufbau umfassend einen Dekorfilm und eine lichtabsorbierende Schicht aufweisen.

7. Verbundglas nach Anspruch 6,
- bei dem der Dekorfilm einen metallisch reflektierenden Polymerfilm umfasst, und/oder
- bei dem die lichtabsorbierende Schicht eine lichtabsorbierende Kunststofffolie oder eine lichtabsorbierende Beschichtung des Dekorfilmes ist.

8. Verbundglas nach Anspruch 7, bei dem die lichtabsorbierende Kunststofffolie eine lichtabsorbierend lackierte oder bedruckte Kunststofffolie ist, insbesondere bei dem die Kunststofffolie eine Polyesterfolie, insbesondere eine Polyethylenterephthalat-Folie ist.

9. Verbundglas nach einem der Ansprüche 6 bis 8, bei dem der Dekorfilm zusätzlich einen transparenten Polymerfilm und/oder eine farbige Beschichtung umfasst, wobei die farbige Beschichtung auf einer der lichtabsorbierende Schicht gegenüberliegenden Seite des Dekorfilms angeordnet ist.

10. Verbundglas nach einem der vorstehenden Ansprüche, zusätzlich umfassend eine zwischen der ersten und zweiten Laminierfolie angeordnete, erste starre Kunststofffolie, wobei die Vielzahl von Pailletten auf einer Oberfläche der ersten starren Kunststofffolie aufgeklebt ist.

11. Verbundglas nach Anspruch 10, weiter umfassend eine zweite starre Kunststofffolie, die mit der ersten starren Kunststofffolie derart verbunden ist, dass die Vielzahl von Pailletten zwischen der ersten und der zweiten starren Kunststofffolie angeordnet ist.

12. Verbundglas nach einem der vorstehenden Ansprüche umfassend eine dritte Glasscheibe, wobei die dritte Glasscheibe und die erste oder zweite Glasscheibe über einen weiteren Laminierfolienverbund mit einer ersten und einer zweiten Laminierfolie und einer Vielzahl von Pailletten mit einer ersten lichtabsorbierenden Oberfläche verbunden sind.

13. Laminierfolienanordnung zur Herstellung eines Laminierfolienverbundes für ein einseitig durchsichtiges Verbundglas nach einem der Ansprüche 1 bis 12, für einen Einbauzustand bei Fassaden oder eine Innenraumgestaltung, insbesondere Verbundsicherheitsglas, umfassend eine erste Laminierfolie und eine Vielzahl von Pailletten mit einer ersten lichtabsorbierenden Oberfläche, die unter Erzeugung eines Erscheinungsbildes auf der ersten Laminierfolie befestigt sind, wobei
- die Pailletten mit der lichtabsorbierenden Oberfläche der ersten Laminierfolie zugewandt sind und derart voneinander beabstandet angeordnet sind, dass das Verbundglas auf Seiten der lichtabsorbierenden Oberfläche der Pailletten betrachtet durchsichtig erscheint, wobei
- eine zweite Oberfläche der Pailletten, die einer zweiten Laminierfolie zugewandt ist, lichtreflektierend ausgebildet ist, wobei das Verbundglas auf Seiten der lichtreflektierenden Oberfläche der Pailletten betrachtet weniger durchsichtig erscheint.

14. Verfahren zur Herstellung einer Laminierfolienanordnung für einen Laminierfolienverbund eines einseitig durchsichtigen Verbundglases nach einem der Ansprüche 1 bis 12 für einen Einbauzustand bei Fassaden oder eine Innenraumgestaltung, insbesondere Verbundsicherheitsglas, umfassend die Schritte:
- Bereitstellen eines Dekorfilms,
- Einseitiges Aufbringen einer lichtabsorbierenden Schicht auf dem Dekorfilm zur Herstellung eines Schichtaufbaus,
- Stanzen oder Zuschneiden einer Vielzahl von Pailletten aus dem Schichtaufbau,
- Übertragen der Vielzahl von Pailletten auf eine erste Laminierfolie unter Erzeugung eines Erscheinungsbildes auf der ersten Laminierfolie, wobei
- die Pailletten mit der lichtabsorbierenden Oberfläche der ersten Laminierfolie zugewandt sind und derart voneinander beabstandet angeordnet sind, dass das Verbundglas auf Seiten der lichtabsorbierenden Oberfläche der Pailletten betrachtet durchsichtig erscheint, wobei
- eine zweite Oberfläche der Pailletten, die einer zweiten Laminierfolie zugewandt ist, lichtreflektierend ausgebildet ist, wobei das Verbundglas auf Seiten der lichtreflektierenden Oberfläche der Pailletten betrachtet weniger durchsichtig erscheint.

15. Verfahren nach Anspruch 14 , zusätzlich umfassend:
- Herstellen eines Dekorfilmes umfassend die Schritte:
- Bereitstellen eines metallisch reflektierenden Polymerfilmes,
- Farbiges Beschichten des metallisch reflektierenden Polymerfilmes und/oder Verbinden des metallisch reflektierenden Polymerfilmes mit einem, insbesondere transparenten, Polymerfilm.

16. Verfahren nach Anspruch 14 oder 15, bei dem beim Übertragen der Vielzahl von Pailletten
- diese direkt auf die erste Laminierfolie übertragen werden, oder
- diese zunächst auf eine erste Kunststofffolie, insbesondere starre Kunststofffolie, vorzugsweise Polyesterfolie, übertragen werden und dann zusammen mit der ersten Polyesterfolie auf die erste Laminierfolie übertragen werden.

17. Verfahren zur Herstellung eines einseitig durchsichtigen Verbundglases nach einem der Ansprüche 1 bis 12, für einen Einbauzustand bei Fassaden oder eine Innenraumgestaltung, insbesondere Verbundsicherheitsglas, umfassend die Schritte:
- Bereitstellen einer Laminierfolienanordnung hergestellt nach einem Verfahren gemäß einem der Ansprüche 14 bis 16,
- Anordnen einer zweiten Laminierfolie zur Bildung eines Laminierfolienverbundes, derart, dass sich die Vielzahl der Pailletten zwischen der ersten und zweiten Laminierfolie befindet,
- Bereitstellen zweier Glasscheiben,
- Einbringen des Laminierfolienverbundes zwischen die Glasscheiben und Laminieren des Verbundglases.

## Claims

1. Unilaterally transparent laminated glass (1000, 2000, 3000, 4000, 5000, 6000A, 6000B, 6000C, 6000D) for an installation state in facades (6000, 7000) or an interior design, in particular laminated safety glass, comprising a first and a second glass pane (100, 101, 102, 200, 201, 202) and a laminating film composite (1001, 3001, 3002) which is arranged between the first and second glass panes and which is connected thereto and which has a first laminating film (110, 111, 112, 113) and a second laminating film (210, 211, 212, 213),
**characterised in that**
- a large number of sequins (300, 301, 302, 303, 304, 305, 500, 600A, 600B, 600C, 600D, 700) having a first light-absorbing surface (501) are arranged between the first laminating film and the second laminating film with an appearance (E) being achieved, wherein
- the sequins with the light-absorbing surface (501) face the first laminating film and are arranged spaced apart from each other in such a manner that the laminated glass when viewed from the light-absorbing surface (501) of the sequins appears to be transparent,
wherein a second surface (502) of the sequins which faces the second laminating film is constructed to be light-reflecting, wherein the laminated glass when viewed from the light-reflecting surface (502) of the sequins appears to be less transparent.

2. Laminated glass according to claim 1, wherein, in the installation state, the first laminating film (110, 111, 112, 113) is provided to face an interior and the second laminating film (210, 211, 212, 213) is provided to face an exterior.

3. Laminated glass according to claim 1 or 2, wherein a shape, size and arrangement of the large number of sequins can be varied in order to produce specific shapes of an overall image which appear coherent in the appearance of the large number of sequins towards the exterior.

4. Laminated glass according to any one of the preceding claims 1 to 3, wherein
- with a uniform appearance being achieved, all the sequins of the large number of sequins have an identical shape and size and are arranged in a regular manner, or
- with an adapted appearance being achieved, the sequins of the large number of sequins have different dimensions and/or are arranged in an irregular manner.

5. Laminated glass according to any one of the preceding claims, wherein the second surface of the sequins which faces the second laminating film is constructed to be metallically reflective and/or wherein the first surface of the sequins which faces the first laminating film is constructed to be black.

6. Laminated glass according to any one of the preceding claims, wherein the sequins have a layered construction comprising a decorative film and a light-absorbing layer.

7. Laminated glass according to claim 6,
- wherein the decorative film comprises a metallically reflective polymer film and/or
- wherein the light-absorbing layer is a light-absorbing plastics material film or a light-absorbing coating of the decorative film.

8. Laminated glass according to claim 7, wherein the light-absorbing plastics material film is a light-absorbently painted or printed plastics material film, in particular wherein the plastics material film is a polyester film, in particular a polyethylene terephthalate film.

9. Laminated glass according to any one of claims 6 to 8, wherein the decorative film additionally comprises a transparent polymer film and/or a coloured coating, wherein the coloured coating is arranged at a side of the decorative film opposite the light-absorbing layer.

10. Laminated glass according to any one of the preceding claims, additionally comprising a first rigid plastics material film which is arranged between the first and second laminating films, wherein the large number of sequins are adhesively bonded to a surface of the first rigid plastics material film.

11. Laminated glass according to claim 10, further comprising a second rigid plastics material film which is connected to the first rigid plastics material film in such a manner that the large number of sequins is arranged between the first and the second rigid plastics material films.

12. Laminated glass according to any one of the preceding claims, comprising a third glass pane, wherein the third glass plane and the first or second glass pane are connected by means of an additional laminating film composite to a first and a second laminating film and a large number of sequins are connected to a light-absorbing surface.

13. Laminating film arrangement for producing a laminating film composite for a unilaterally transparent laminated glass according to any one of claims 1 to 12, for an installation state in facades or an interior design, in particular laminated safety glass, comprising a first laminating film and a large number of sequins having a first light-absorbing surface which are secured to the first laminating film so as to produce an appearance, wherein
- the sequins with the light-absorbing surface face the first laminating film and are arranged spaced apart from each other in such a manner that the composite glass when viewed from the light-absorbing surface of the sequins appears transparent, wherein
- a second surface of the sequins which faces a second laminating film is constructed to be light-reflecting, wherein the laminated glass when viewed from the light-reflecting surface of the sequins appears to be less transparent.

14. Method for producing a laminating film arrangement for a laminating film composite of a unilaterally transparent laminated glass according to any one of claims 1 to 12 for an installation state in facades or an interior design, in particular laminated safety glass, comprising the steps of:
- providing a decorative film,
- unilateral application of a light-absorbing layer on the decorative film in order to produce a layered construction,
- punching or cutting a large number of sequins from the layered construction,
- transferring the large number of sequins to a first laminating film so as to produce an appearance on the first laminating film, wherein
- the sequins with the light-absorbing surface face the first laminating film and are arranged spaced apart from each other in such a manner that the laminated glass when viewed from the light-absorbing surface of the sequins appears to be transparent, wherein,
- a second surface of the sequins which face a second laminating film is constructed to be light-reflecting, wherein the laminated glass when viewed from the light-reflecting surface of the sequins appears to be less transparent.

15. Method according to claim 14, additionally comprising:
- producing a decorative film comprising the steps of:
- providing a metallically reflective polymer film,
- colour-coating the metallically reflective polymer film and/or connecting the metallically reflective polymer film to an in particular transparent polymer film.

16. Method according to claim 14 or 15, wherein, during the transfer of the large number of sequins,
- they are transferred directly to the first laminating film, or
- they are first transferred to a first plastics material film, in particular a rigid plastics material film, preferably polyester film, and then transferred together with the first polyester film to the first laminating film.

17. Method for producing a unilaterally transparent laminated glass according to any one of claims 1 to 12, for an installation state in facades or an interior design, in particular laminated safety glass, comprising the steps of:
- providing a laminating film arrangement produced according to a method according to any one of claims 14 to 16,
- arranging a second laminating film in order to form a laminating film composite in such a manner that the large number of sequins is located between the first and second laminating film,
- providing two glass panes,
- introducing the laminating film composite between the glass panes and laminating the laminated glass.

## Revendications

1. Verre composite transparent d'un côté (1000, 2000, 3000, 4000, 5000, 6000A, 6000B, 6000C, 6000D) pour un montage sur des façades (6000, 7000) ou un aménagement intérieur, plus particulièrement un verre composite de sécurité, comprenant une première et une deuxième vitre (100, 101, 102, 200, 201, 202) ainsi qu'un composite de films laminés (1001, 3001, 3002) disposé entre la première et la deuxième vitre et relié avec celles-ci, avec un premier film laminé (110, 111, 112, 113) et un deuxième film laminé (210, 211, 212, 213),
**caractérisé en ce que**
- une pluralité de paillettes (300, 301, 302, 303, 304, 305, 500, 600A, 600B, 600C, 600D, 700), avec une première surface absorbant la lumière (501), sont disposées entre le premier film laminé et le deuxième film laminé afin d'obtenir une apparence (E), dans lequel
- les paillettes avec la surface absorbant la lumière (501) sont orientées vers le premier film laminé et sont disposées de manière distante entre elles de façon à ce que le verre composite semble transparent lorsqu'il est observé du côté de la surface absorbant la lumière (501) des paillettes,
dans lequel une deuxième surface (502) des paillettes, qui est orientée vers le deuxième film laminé, est conçu de façon à réfléchir la lumière, dans lequel le verre composite semble moins transparent lorsqu'il est observé du côté de la surface réfléchissant la lumière (502) des paillettes.

2. Verre composite selon la revendication 1, dans lequel, dans l'état monté, le premier film laminé (110, 111, 112, 113) est prévu pour être orienté vers un espace intérieur et le deuxième film laminé (210, 211, 212, 213) est prévu pour être orienté vers un espace extérieur.

3. Verre composite selon la revendication 1 ou 2, dans lequel une forme, taille et disposition de la pluralité de paillettes peuvent varier afin de produire certaines formes d'une image d'ensemble dans l'apparence de la pluralité de paillettes vers l'espace extérieur.

4. Verre composite selon l'une des revendications précédentes 1 à 3, dans lequel
- afin d'obtenir une apparence uniforme, toutes les paillettes de la pluralité de paillettes présentent la même forme et la même taille et sont disposées uniformément ou
- afin d'obtenir une apparence adaptée, les paillettes de la pluralité de paillettes présentent différentes dimensions et/ou sont disposées de manière irrégulière.

5. Verre composite selon l'une des revendications précédentes, dans lequel la deuxième surface des paillettes, qui est orientée vers le deuxième film laminé, est conçue de façon à être réfléchissante de manière métallique et/ou dans lequel la première surface des paillettes, qui est orientée vers le premier film laminé, est noire.

6. Verre composite selon l'une des revendications précédentes, dans lequel les paillettes présentent une structure en couches comprend un film décoratif et une couche absorbant la lumière.

7. Verre composite selon la revendication 6,
- dans lequel le film décoratif comprend un film polymère réfléchissant de manière métallique et/ou
- dans lequel la couche absorbant la lumière est un film de matière plastique absorbant la lumière ou un revêtement absorbant la lumière du film décoratif.

8. Verre composite selon la revendication 7, dans lequel le film de matière plastique absorbant la lumière est un film de matière plastique absorbant la lumière peint ou imprimé, plus particulièrement dans lequel le film de matière plastique est un film de polyester, plus particulièrement un film de polyéthylène téréphtalate.

9. Verre composite selon l'une des revendications 6 à 8, dans lequel le film décoratif comprend en outre un film polymère transparent et/ou un revêtement coloré, dans lequel le revêtement coloré est disposé sur un côté du film décoratif opposé à la couche absorbant la lumière.

10. Verre composite selon l'une des revendications précédentes, comprenant en outre un premier film de matière plastique rigide disposé entre les première et deuxième films laminés, dans lequel la pluralité de paillettes sont collées sur une surface du premier film de matière plastique rigide.

11. Verre composite selon la revendication 10, comprenant en outre un deuxième film de matière plastique rigide qui est relié avec le premier film de matière plastique rigide de façon à ce que la pluralité de paillettes soient disposées entre les premier et deuxième film de matière plastique rigides.

12. Verre composite selon l'une des revendications précédentes, comprenant une troisième vitre, dans lequel la troisième vitre et la première ou la deuxième vitre sont reliées, par l'intermédiaire d'un autre composite de films laminés, avec un premier ou un deuxième film laminé et une pluralité de paillettes avec une première surface absorbant la lumière.

13. Disposition de films laminés pour la fabrication d'un composite de films laminés pour un verre composite transparent d'un seul côté selon l'une des revendications 1 à 12, pour un montage sur des façades ou un aménagement intérieur, plus particulièrement verre composite de sécurité, comprenant un premier film laminé et une pluralité de paillettes avec une première surface absorbant la lumière et sont fixées afin d'obtenir une apparence sur le premier film laminé, dans lequel
- les paillettes avec la surface absorbant la lumière sont orientées vers le premier film laminé et sont disposées de manière distante entre elles de façon à ce que le verre composite semble transparent lorsqu'il est observé du côté de la surface absorbant la lumière des paillettes, dans lequel
- une deuxième surface des paillettes, qui est orientée vers un deuxième film laminé, est conçue de façon à réfléchir la lumière, dans lequel le verre composite semble moins transparent lorsqu'il est observé du côté de la surface réfléchissant la lumière des paillettes.

14. Procédé de fabrication d'un agencement de films laminés pour un composite de films laminés d'un verre composite transparent d'un seul côté selon l'une des revendications 1 à 12 pour un montage sur des façades ou un aménagement intérieur, plus particulièrement un verre de sécurité, comprenant les étapes suivantes :
- mise à disposition d'un film décoratif,
- application, sur un seul côté, d'une couche absorbant la lumière sur le film décoratif afin de réaliser une structure en couches,
- estampage ou découpe d'une pluralité de paillettes sur la structure en couches,
- transfert de la pluralité de paillettes vers un premier film laminé afin d'obtenir une apparence sur le premier film laminé, dans lequel
- les paillettes avec la surface absorbant la lumière sont orientées vers le premier film laminé et sont disposées de manière distante entre elles de façon à ce que le verre composite semble transparent lorsqu'il est observé du côté de la surface absorbant la lumière des paillettes, dans lequel
- une deuxième surface des paillettes, qui est orientée vers un deuxième film laminé, est conçue de façon à réfléchir la lumière, dans lequel le verre composite semble moins transparent lorsqu'il est observé du ôté de la surface réfléchissant la lumière des paillettes.

15. Procédé selon la revendication 14, comprenant en outre :
- la réalisation d'un film décoratif comprenant les étapes :
- mise à disposition d'un film polymère réfléchissant de manière métallique,
- revêtement coloré du film polymère réfléchissant de manière métallique avec un film polymère, plus particulièrement transparent.

16. Procédé selon la revendication 14 ou 15, dans lequel, lors du transfert de la pluralité de paillettes
- celles-ci sont transférées directement vers le premier film laminé ou
- celles-ci sont d'abord transférées vers un premier film de matière plastique, plus particulièrement un film de matière plastique rigide, de préférence un film de polyester puis elles sont transférées, conjointement avec le premier film de polyester, vers le premier film laminé.

17. Procédé de fabrication d'un verre composite transparent d'un seul côté selon l'une des revendications 1 à 12, pour un montage sur des façades ou un aménagement intérieur, plus particulièrement un verre de sécurité, comprenant les étapes suivantes :
- mise à disposition d'une disposition de films laminés réalisée selon un procédé selon l'une des revendications 14 à 16,
- disposition d'un deuxième film laminé afin de former un composite de films laminés de façon à ce que la pluralité de paillettes se trouvent entre les premier et deuxième films laminés,
- mise à disposition de deux vitres,
- insertion du composite de films laminés entre les vitres et laminage du verre composite.
